# EUROPEAN PATENT SPECIFICATION

(11) **EP 3 760 323 B1**
(45) Date of publication and mention of the grant of the patent: **12.04.2023**
(21) Application number: 20179783.4
(22) Date of filing: 12.06.2020
(51) Int. Cl.: B08B 3/02, B08B 13/00, F26B 21/00

(54) **CLEANING APPARATUS AND CLEANING METHOD**
REINIGUNGSVORRICHTUNG UND REINIGUNGSMETHODE
APPAREIL DE NETTOYAGE ET PROCÉDÉ DE NETTOYAGE

(30) Priority: 05.07.2019 JP 2019126289; 02.08.2019 JP 2019143283
(43) Date of publication of application: 06.01.2021
(73) Proprietor: Sugino Machine Limited, Namerikawa City, Toyama 936-8577 (JP)
(72) Inventor: KAWAMORI, Yoshiteru, Uozu City, Toyama 9378511 (JP); MITSUE, Toyoaki, Uozu City, Toyama 9378511 (JP)
(74) Representative: Global IP Europe Patentanwaltskanzlei

(56) References cited:
- EP-A2- 1 145 774
- DE-A1-102007 016 120
- DE-U1-202019 105 406
- JP-B2- 5 432 943

## Description

### BACKGROUND

### 1. Technical Field

The present invention relates to a cleaning apparatus and a cleaning method. 2. Description of the Background

A conventional cleaning apparatus includes a quill, a center post fixed to the quill, a turret head pivotally disposed on the center post, a tool support member disposed on the turret head, a cleaning tool rotatably disposed on the tool support member, a spindle, and a joint device. See, for example, Japanese Patent No. 5,432,943.

In addition, a proposed cleaning apparatus includes a 180 degree turning table, in which a workpiece is installed and clamped on a cleaning table arranged on the turning table (Sugino Machine Co., Ltd., Catalog "JCC series Jet Clean Center Series of General-purpose High-Efficiency Cleaning Systems", Catalog No. Q2426N, pages 8 and 12).

EP 1 145 774 A2 discloses a cleaning apparatus wherein each of the cleaning station and the drying station includes a lifter having a lift table, the lifter is configured to move up and down between a cleaning position and a retracted position, the lift table moves up to support the cleaning table (P) at the cleaning position and retracts the lift table below the transfer device (F) at the retracted position.

### BRIEF SUMMARY

When an axially extending workpiece such as a crankshaft is installed on the cleaning table and rotated together with the cleaning table, it is necessary to retract a nozzle when the cleaning table is rotated. In addition, it is difficult to bring an air blowing nozzle close to the workpiece.

An object of the present invention is to provide a cleaning apparatus and a cleaning method which clamps an axially extending workpiece on a center axis to clean an end portion and a shaft portion, and perform cleaning and drying in a short time.

A first aspect of the present invention provides, in accordance with claim 1, a cleaning apparatus for cleaning a workpiece, the cleaning apparatus including:
a cleaning chamber having a first side wall, and a second side wall opposed to the first side wall, the cleaning chamber including
   a cleaning station having a cleaning axis, the cleaning station being provided with a cleaning nozzle, the cleaning station including
      a first clamping device arranged on the second side wall, and
      a second clamping device arranged on the first side wall,
   a drying station having a drying axis, the drying station being provided with a drying nozzle, the drying station including
      the first clamping device arranged on the second side wall, and
      the second clamping device arranged on the first side wall;
a turn table having two regions arranged in a 180 degree rotational symmetry, the turn table configured to arrange one of the two regions in the cleaning station and the other of the two regions in the drying station; and
a cleaning table arranged in each of the two regions, the cleaning table including a journal block;
wherein each of the cleaning station and the drying station includes a lifter having a lift table, the lifter is configured to move up and down between a cleaning position and a retracted position, the lift table moves up to support the cleaning table at the cleaning position, and the cleaning table is placed on the turn table to retract the lift table below the turn table at the retracted position,
the first clamping device includes
   a first slide shaft configured to reciprocate along the cleaning axis or the drying axis,
   a first clamp shaft supported in the first slide shaft in a rotatable manner about the cleaning axis or the drying axis to abut the workpiece,
   a first clamp driving device configured to reciprocate the first slide shaft, and
   a motor configured to rotate the first clamp shaft,
the second clamping device includes
   a second slide shaft configured to reciprocate along the cleaning axis or the drying axis,
   a second clamp shaft supported in the second slide shaft in a rotatable manner about the cleaning axis or the drying axis to abut the workpiece, and
   a second clamp driving device configured to reciprocate the second slide shaft.

A second aspect of the present invention provides, in accordance with claim 11, a cleaning method of axially extending workpiece, the cleaning method including:
loading the workpiece on a cleaning table;
lowering a lifter to place the cleaning table on a turn table;
turning the turn table to convey the workpiece from a drying station to a cleaning station,
moving the cleaning table by the lifter to align a center axis of the workpiece with a cleaning axis in the cleaning station;
clamping the workpiece by abutting a first clamp shaft extending from a first side wall of a cleaning chamber against a first end of the workpiece, and by abutting a second clamp shaft extending from a second side wall of the cleaning chamber opposed to the first side wall against a second end of the workpiece;
lowering the lifter to place the cleaning table on the turn table;
cleaning an outer circumferential surface of the workpiece while rotating the workpiece, the first clamp shaft, and the second clamp shaft together;
moving the cleaning table to a cleaning position by the lifter;
unclamping the workpiece by separating the first clamp shaft from the first end of the workpiece, and by separating the second clamp shaft from the second end of the workpiece;
lowering the lifter to place the cleaning table on the turn table;
turning the turn table to convey the workpiece from the cleaning station to the drying station;
moving the cleaning table to a drying position by the lifter to align the center axis of the workpiece with a drying axis in the drying station;
clamping the workpiece by abutting the first clamp shaft extending from the second side wall of the cleaning chamber against the first end of the workpiece, and by abutting the second clamp shaft extending from the first side wall of the cleaning chamber against the second end of the workpiece;
lowering the lifter to place the cleaning table on the turn table;
drying the outer circumferential surface of the workpiece while rotating the workpiece, the first clamp shaft, and the second clamp shaft together;
moving the cleaning table to the drying position by the lifter;
unclamping the workpiece by separating the first clamp shaft from the first end of the workpiece, and by separating the second clamp shaft from the second end of the workpiece; and
unloading the dried workpiece from the cleaning table.

The cleaning includes deburring by a high pressure jet.

The insertion portion and the receiving portion are, for example, a pair of couplings, a cylindrical pin and a cylindrical hole into which the cylindrical pin is inserted. Preferably, the tip of the cylindrical pin has a conical portion. Instead of the cylindrical pin, a diamond locating pin may be used. Preferably, two the insert portions and two the receiving portions are arranged on the cleaning table apart from each other.

By moving the guide groove along the guide, it is possible to suppress the position of the cleaning table in the horizontal direction from shifting when the cleaning table moves to the cleaning position or the drying position. The guide may be disposed from the lower end to a height in the middle of the distance of movement of the cleaning table. Since the guide groove is restricted to the guide, it is possible to suppress the cleaning table from falling off from the turn table when the turn table turns.

Instead of the guide groove, for example, a guide hole or a guide block may be used. If the guide block moves up and down on the guide so that the cleaning table can be raised accurately to the cleaning position, the insert portion and the receiving portion may be omitted.

The passage opening preferably opens outwardly as viewed from the turning axis.

The cleaning apparatus may include a guide arranged to extend in the vertical direction on the turn table, and a guide groove slightly larger than the horizontal cross-sectional shape of the guide arranged on the cleaning table.

The second insertion portion and the second receiving portion are positioning members, for example, a cylindrical pin and a cylindrical hole into which the cylindrical pin is inserted. Preferably, the tip of the cylindrical pin has a conical portion. The cylindrical hole may fit into the cylindrical pin. Instead of the cylindrical pin, a diamond locating pin may be used.

As the lifter moves up and down, the lift table passes through the passage opening of the turn table. As the lifter rises, the lift table passes through the turn table upwardly from below, and the cleaning table is placed on the lift table, and the lift table lifts up the cleaning table to the cleaning position or the drying position. When the lifter descends, the lift table is retracted below the turn table with the cleaning table placed on the turn table.

The lift cylinder is, for example, an air cylinder or an electric cylinder.

The first clamp driving device and the second clamp driving device are, for example, an air cylinder or an electric cylinder.

According to the cleaning apparatus and the cleaning method of the present invention, an axially extending workpiece is clamped on the center axis, and the end portion and the shaft portion is cleaned, and cleaning and drying is performed in a short time.

### BRIEF DESCRIPTION OF DRAWINGS

FIG. 1 is a schematic configuration diagram of a cleaning apparatus of the embodiment.
FIG .2 is a perspective view of a workpiece of the embodiment.
FIG. 3 is a perspective view of a cleaning table of the embodiment.
FIG. 4 is a cross-sectional view of the cleaning apparatus of the embodiment.
FIG. 5 is a perspective view of the cleaning table of the embodiment.
FIG. 6 is a flowchart showing the cleaning method of the embodiment.
FIG. 7A is a cross-sectional view showing a state before turning a turning table of the embodiment.
FIG. 7B is a cross-sectional view showing a state in which the workpiece of the embodiment is raised.
FIG. 7C is a perspective view showing a cleaning state of an end portion of the embodiment.
FIG. 7D is a cross-sectional view showing a clamped state of the embodiment.
FIG. 7E is a cross-sectional view showing a state in which the table of the embodiment is retracted.
FIG. 7F is a perspective view showing a cleaning state of a shaft portion of the embodiment.
FIG. 7G is a perspective view showing a drying state of the embodiment.
FIG. 7H is a cross-sectional view showing a loading state of the workpiece of the embodiment.

### DETAILED DESCRIPTION

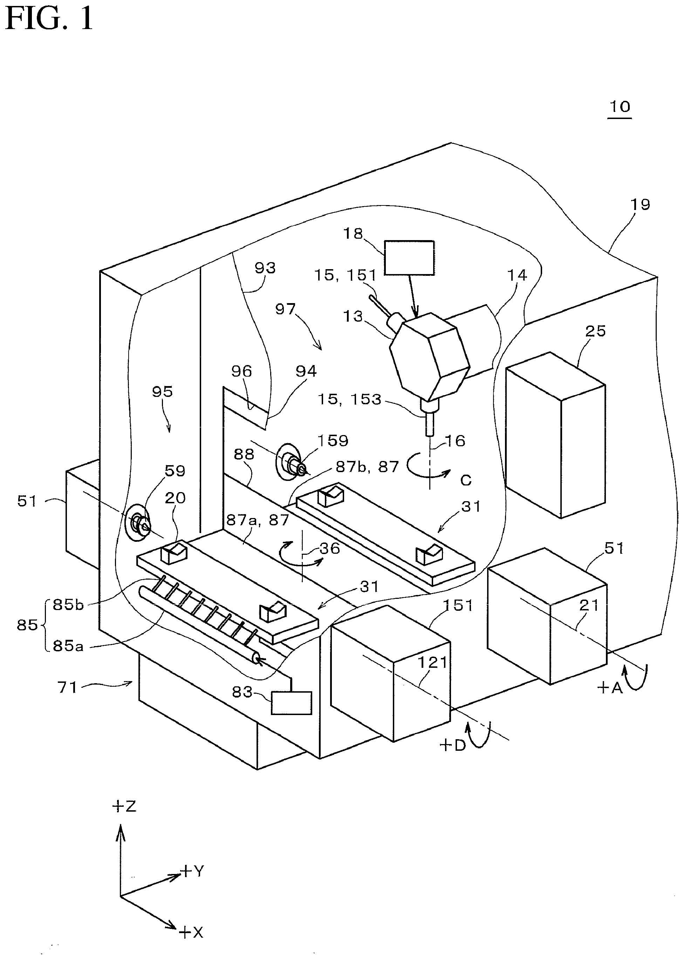

As shown in FIG. 1, the cleaning apparatus 10 includes a cleaning chamber 19, a partition wall 93, an intermediate shutter 94, a turn table 87, a cleaning table 31, a clamping device (first clamping device) 51, a clamping device (second clamping device) 151, a lifter 71, a moving device 14, a nozzle 15, an air blowing device 85, and a control device 25. The cleaning apparatus 10 may include a turret 13, a pump 18, and an air source 83.

The cleaning chamber 19 is, for example, box-shaped. The cleaning chamber 19 has a drying station 95 at the front and a cleaning station 97 at the rear. The nozzle 15 and the moving device 14 are arranged in the cleaning station 97.

The turn table 87 is arranged across the cleaning station 97 and the drying station 95. The turn table 87 includes two regions 87a, 87b and a movable wall 88. The movable wall 88 partitions the turn table 87 into two regions 87a, 87b. The turn table 87 turns about the turning axis 36 by 180 degrees. The turning axis 36 extends in the vertical direction (Z-axis direction) on the boundary between the cleaning station 97 and the drying station 95.

The regions 87a, 87b are arranged in a 180 degree rotational symmetry about the turning axis 36. At the turning end, the turn table 87 positions one of the two regions 87a, 87b at the cleaning station 97 and the other at the drying station 95.

The movable wall 88 is a flat plate and is fixed to the turn table 87 on a plane passing through the turning axis 36 and perpendicular to the turn table 87. When the turn table 87 is positioned, the movable wall 88 is connected to the partition wall 93. The movable wall 88 turns about the turning axis 36 together with the turn table 87.

The partition wall 93 is a flat plate and is disposed in the cleaning chamber 19. The partition wall 93 partitions the cleaning chamber 19 into the cleaning station 97 and the drying station 95. The partition wall 93 passes through the turning axis 36 and extends parallel to the XZ plane. The partition wall 93 has a conveyance port 96. When the turn table 87 turns, the turn table 87, the cleaning table 31, and the workpiece 3 pass through the conveyance port 96.

The intermediate shutter 94 opens and closes the conveyance port 96. For example, the intermediate shutter 94 is a sliding door that slides up and down. When the intermediate shutter 94 is lowered, the intermediate shutter 94 contacts the movable wall 88. When the intermediate shutter 94 comes into contact with the movable wall 88, the conveyance port 96 is closed.

A loading port (not shown) is located at the drying station 95. The loading port is disposed, for example, on the front surface or the upper surface of the cleaning apparatus 10. The loading shutter (not shown) opens and closes the loading port. The loading shutter is, for example, a slide door.

A pair of clamping devices 51, 151 and a lifter 71 are arranged both in the drying station 95 and the cleaning station 97. In the drying station 95, the clamping device 51 is arranged on the left side and the clamping device 151 is arranged on the right side. In the cleaning station 97, the clamping device 51 is arranged on the right side and the clamping device 151 is arranged on the left side. The lifter 71 is disposed below the cleaning chamber 19.

The clamping device 51 includes a clamp shaft 59. The clamping device 151 includes a clamp shaft 159. At the drying station 95, the clamp shafts 59 and 159 rotate about a drying axis 121. At the cleaning station 97, the clamp shafts 59 and 159 rotate about a cleaning axis 21. For example, the drying axis 121 has the same height as the cleaning axis 21. The moving device 14 moves the nozzle 15 relative to the workpiece 3.

The pump 18 is a liquid pump such as a piston pump, a gear pump, or a centrifugal pump. The pump 18 supplies cleaning liquid supplied from a cleaning liquid tank (not shown) to the nozzle 15 via the turret 13.

The moving device 14 freely moves the turret 13 and the nozzle 15 in the left-right direction (X-axis direction), the front-rear direction (Y-axis direction), and the vertical direction (Z-axis direction) with respect to the cleaning table 31.

The clamping devices 51, 151 clamp the workpiece 3 in the direction of the cleaning axis 21 and rotate about the cleaning axis 21 in the A-axis direction.

The turret 13 is provided on the moving device 14. The turret 13 has a nozzle rotation axis 16 extending in the Z-axis direction. The turret 13 may have a plurality of nozzles 15. The turret 13 rotates to select one nozzle 15. The turret 13 supplies the cleaning liquid to the selected nozzle 15. The moving device 14 or the turret 13 rotates the nozzle 15 about the nozzle rotation axis 16 in the C-axis direction. As the turret 13, for example, Japanese Patent Nos. 6147623 and 5432943 are known.

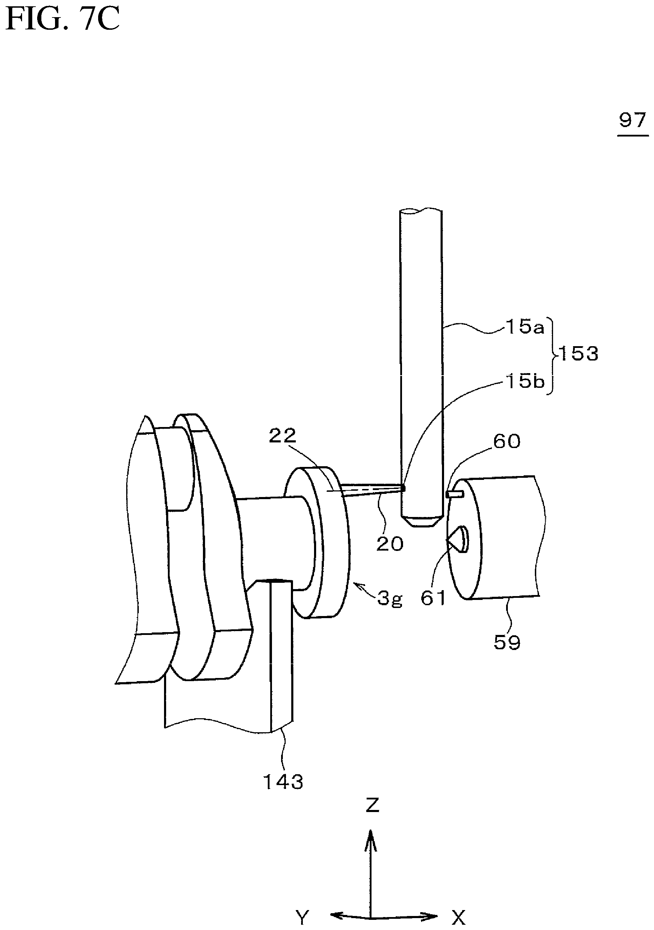

The nozzle 15 is provided in the turret 13. Preferably, the nozzle 15 rotates about the nozzle rotation axis 16 or is positioned in a rotational direction. The nozzle 15 is, for example, a lateral nozzle 153 or a flat spray nozzle 155. For example, as shown in FIG. 7C, the lateral nozzle 153 has a shaft body 15a and an injection port 15b. The injection port 15b is disposed at the distal end portion of the shaft body 15a, and has an axis line 22 perpendicular to the shaft body 15a. The injection port 15b injects the high-pressure jet 20 along the axis line 22.

The air source 83 is, for example, a compressor or a blower. The air blowing device 85 includes an air blowing pipe 85a and a plurality of air blowing nozzles 85b. The air blowing pipe 85a is disposed, for example, below the front of the drying station 95. The air blowing pipe 85a extends in parallel with the cleaning axis 21. The plurality of air blowing nozzles 85b are arranged along the air blowing pipe 85a. The air blowing nozzle 85b extends from the air blowing pipe 85a toward the drying axis 121. The air blowing nozzle 85b is connected to the air source 83 via an air blowing pipe 85a.

The control device 25 controls the moving device 14, the clamping devices 51 and 151, the lifter 71, the turn table 87, the pump 18, and the air source 91.

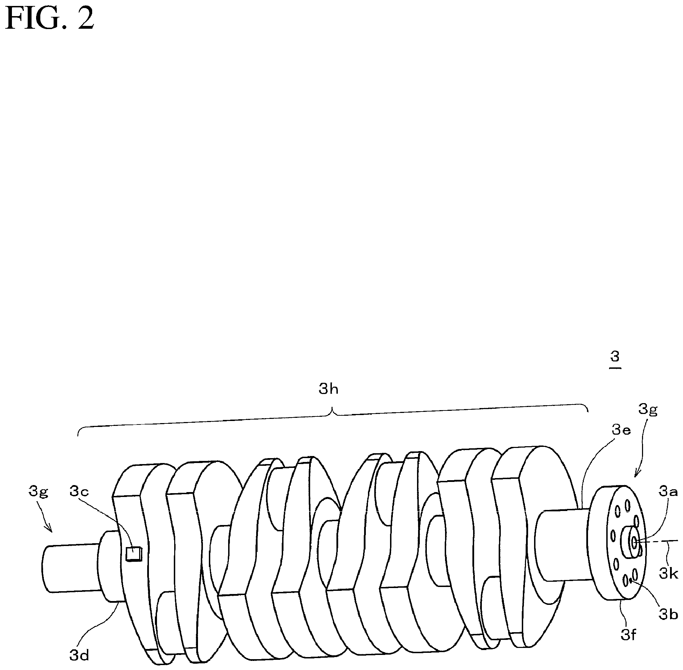

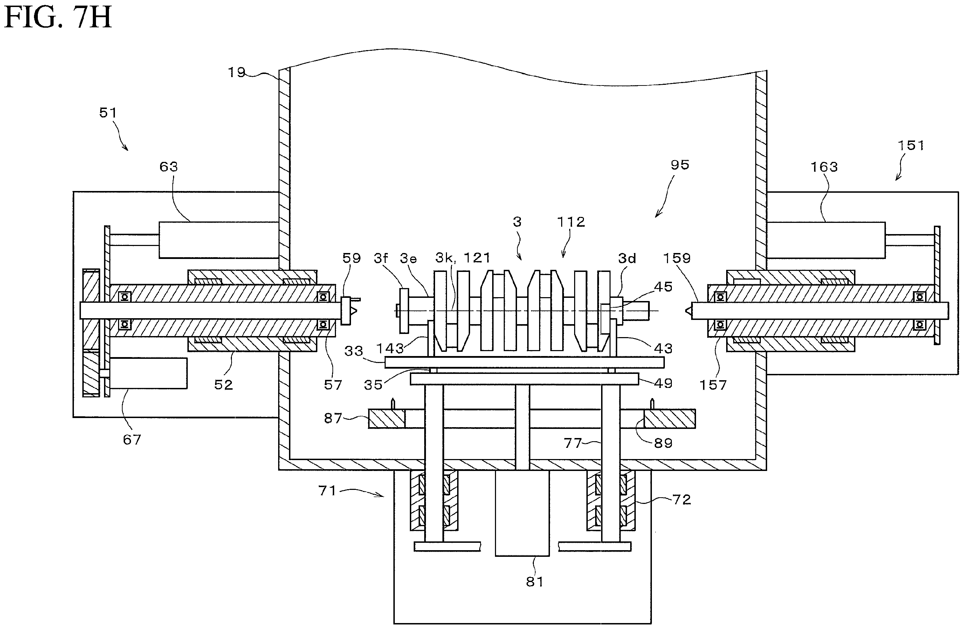

As shown in FIG. 2, the workpiece 3 of the present embodiment is, for example, a crankshaft. The workpiece 3 includes a flange 3f, a phasing surface 3c, a journal (first journal) 3d, a journal (second journal) 3e, a center hole 3a, a phasing hole 3b, an end 3g, a shaft portion 3h and a center axis 3k. When the workpiece 3 is installed in the drying station 95, for example, the flange 3f is located at the left end from the front, and the phasing surface 3c is located at the right end (see FIG. 7H). The first journal 3d is located at the right end, and the second journal 3e is located at the left end.

The center hole 3a is, for example, conical. The center holes 3a are arranged at both ends of the workpiece 3. The phasing hole 3b is, for example, a cylindrical hole arranged in the flange 3f away from the center axis 3k and extends along the center axis 3k. The phasing surface 3c is, for example, a plane arranged parallel to the center axis 3k. The center axis 3k is the rotational center of the workpiece 3.

Hereinafter, the region 87b, the cleaning table 31, the lifter 71, the clamping device 51, and the clamping device 151 will be described in a state that the region 87b is positioned at the cleaning station 97. The region 87a and the drying station 95 are substantially the same as the region 87b and the cleaning station 97.

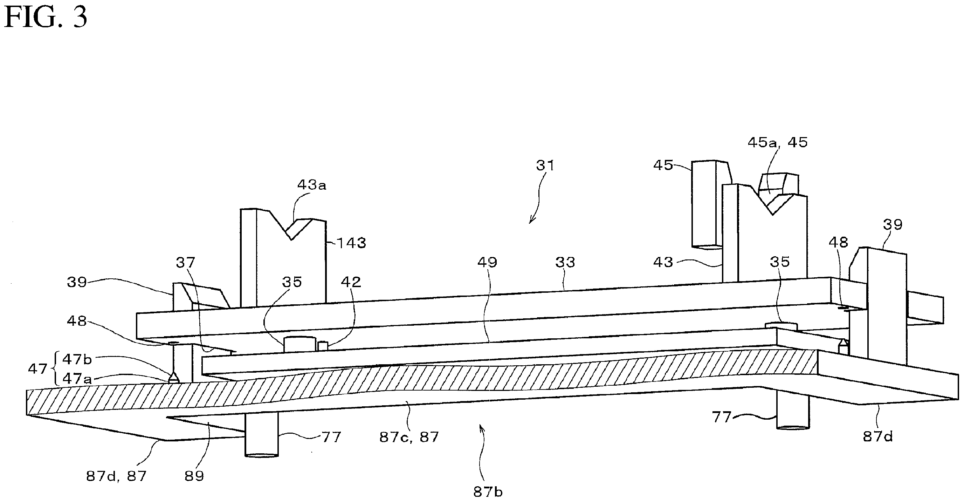

FIG. 3 is a perspective view of the cleaning table 31 in which the lifter 71 is ascending, as viewed obliquely from the lower front. As shown in FIG. 3, the turn table 87 has a passage opening 89. The turn table 87 may include a guide 39, a round pin (second insertion portion) 47. The passage opening 89, the guide 39, and the round pin 47 are disposed in the region 87b.

The passage opening 89 is a rectangular cutout opened rearward. In other words, the turn table 87 includes a center plate 87c and a projecting portion 87d. The projecting portions 87d extend rearward from the left and right end portions of the center plate 87c.

The pair of guides 39 are respectively disposed at the center of the projecting portion 87d in the front-rear direction. The guide 39 is a so-called rough guide. The guide 39 extends in the vertical direction and is disposed on the turn table 87. The guide 39 has a thin prism shape, and has an inclined surface whose tip portion inclines outward.

The pair of round pins 47 are respectively disposed at the distal end of the upper surfaces of the projecting portion 87d. The round pin 47 includes a cylindrical portion 47a and a tapered portion 47b. The tapered portion 47b has a conical shape, and is disposed above the cylindrical portion 47a so as to be continuous with the cylindrical portion 47a.

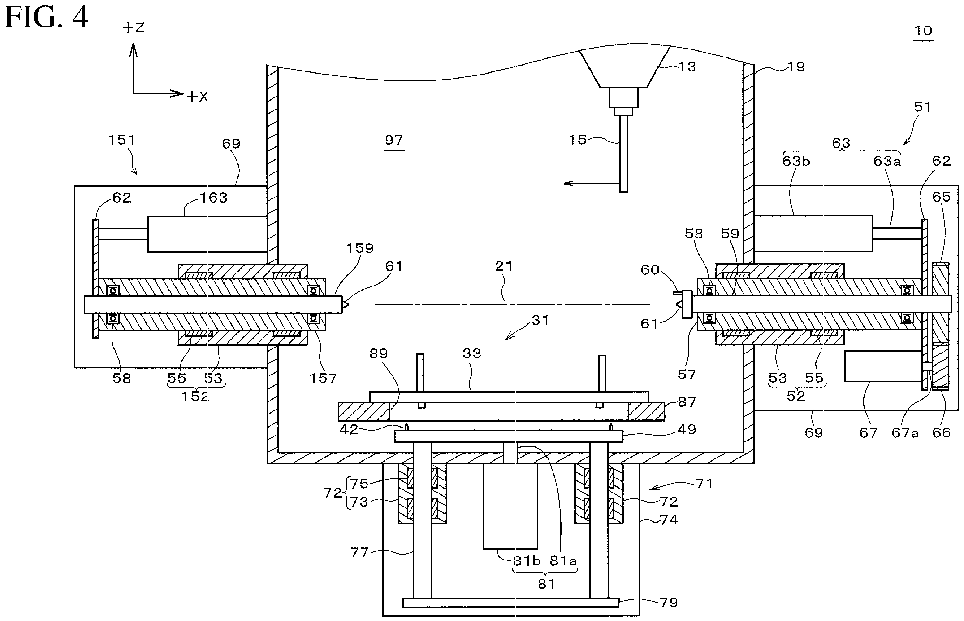

FIG. 4 is a cross-sectional view of a vertical plane passing through the cleaning axis 21 as viewed from the front. As shown in FIG. 4, the clamping device 51 includes a guide bush (first guide bush) 52, a slide shaft (first slide shaft) 57, a bearing 58, a clamp shaft (first clamp shaft) 59, a motor (clamp shaft motor) 67, a driving gear 66, a driven gear 65, a connecting plate 62, and a clamp cylinder (first clamp driving device) 63. Preferably, the clamping device 51 includes a cover 69, a center pin 61 and a phasing pin 60.

The guide bush 52 may include a housing 53 and a bush 55. The housing 53 has, for example, a hollow cylindrical shape, and is disposed coaxially with the cleaning axis 21. The housing 53 is disposed, for example, through a side wall of the cleaning chamber 19.

The slide shaft 57 has, for example, a hollow cylindrical shape, and is arranged coaxially with the cleaning axis 21. The slide shaft 57 slides in the bush 55 and reciprocates in the left-right direction (X-axis direction). The slide shaft 57 includes a bearing 58 therein. The clamp shaft 59 is cylindrical and is supported by the bearing 58. The clamp shaft 59 is arranged coaxially with the cleaning axis 21. The center pin 61 and the phasing pin 60 are disposed on the distal end surface of the clamp shaft 59. Here, the distal end is an end on the side of the workpiece 3, and the basal end is an end on the side opposite to the workpiece 3. The center pin 61 has a conical shape and is disposed coaxially with the cleaning axis 21. The phasing pin 60 is disposed at a position away from the cleaning axis 21 and parallel to the cleaning axis 21. The center pin 61 and the phasing pin 60 are inserted into the center hole 3a and the phasing hole 3b of the workpiece 3, respectively. When inserted into the workpiece 3, the center pin 61 and the phasing pin 60 abut against the center hole 3a and the phasing hole 3b.

The connecting plate 62 is disposed at the basal end of the slide shaft 57.

The clamp cylinder 63 includes a rod 63a and a cylinder 63b. For example, the cylinder 63b is connected to the cleaning chamber 19, and the rod 63a is connected to the connecting plate 62. The clamp cylinder 63 is an electric cylinder, and is numerically controlled by the control device 25. When the clamp cylinder 63 contracts, the slide shaft 57 advances (advances to the left). When the clamp cylinder 63 extends, the slide shaft 57 retreats (advances to the right).

The motor 67 is disposed on the connecting plate 62. The motor 67 includes an output shaft 67a. The motor 67 is, for example, a servo motor.

The driving gear 66 is fixed to the output shaft 67a. The driven gear 65 is fixed to the clamp shaft 59 and meshes with the driving gear 66. The driving gear 66 and the driven gear 65 are, for example, spur gears and helical gears.

Preferably, the clamp cylinder 63, the connecting plate 62, the driven gear 65, the driving gear 66, and the motor 67 are disposed outside the cleaning chamber 19.

The cover 69 is a safety cover, and covers the guide bush 52, the slide shaft 57, the driving gear 66, the driven gear 65, the connecting plate 62, the clamp cylinder 63, and the motor 67.

The clamping device 151 includes a guide bush (second guide bush) 152, a slide shaft (second slide shaft) 157, a bearing 58, a connecting plate 62, and a clamp cylinder (second clamp drive device) 163. Preferably, the clamping device 151 includes a cover 69 and a center pin 61. The guide bush 152 has the same structure as the guide bush 52. The slide shaft 157 has the same structure as the slide shaft 57. The center pin 61 is disposed at the right end of the clamp shaft 159. The clamp cylinder 163 has the same structure as the clamp cylinder 63.

The lifter 71 includes a lift table 49, a lift guide 72, a stem 77, and a lift cylinder 81. The lifter 71 may include a cover 74 and a connecting plate 79.

The lift guide 72 has a housing 73 and a bush 75, and is disposed below the cleaning chamber 19. The housing 73 has a hollow cylindrical shape and extends in the vertical direction. The bush 75 is disposed inside the housing 73.

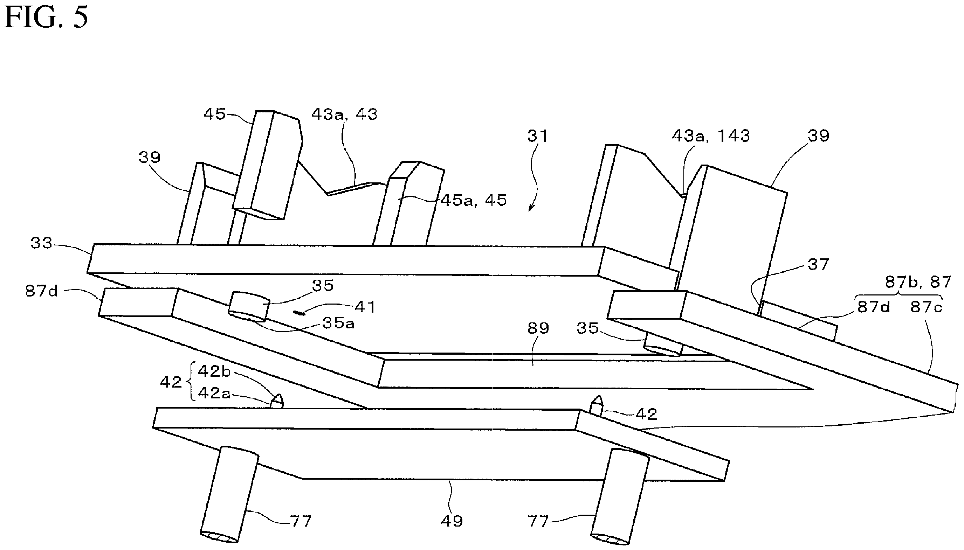

FIG. 5 is a perspective view of the cleaning table 31 in a state in which the lifter 71 is lowered, as seen from a front obliquely lower side. As shown in FIG. 5, the lift table 49 has a round pin (first inserting portion) 42 on its upper surface. The lift table 49 is a rectangular flat plate. The round pin 42 includes a cylindrical portion 42a and a tapered portion 42b. The tapered portion 42b has a conical shape, and is disposed above the cylindrical portion 42a so as to be continuous with the cylindrical portion 42a. In plan view, the lift table 49 overlaps the passage opening 89 when the turn table 87 is positioned, and is smaller than the passage opening 89.

The stem 77 has, for example, a cylindrical shape. As shown in FIG. 4, the stem 77 slides in the bush 75 and reciprocates in the vertical direction (Z-axis direction). The upper portion of the stem 77 is connected to the lift table 49. Preferably, the stem 77 is disposed through the bottom surface of the cleaning chamber 19. Preferably, a plurality of stems 77 are disposed.

The connecting plate 79 connects the lower end of the stem 77.

The lift cylinder 81 is disposed in the cleaning chamber 19. The lift cylinder 81 includes a cylinder 81b and a rod 81a. For example, the cylinder 81b is disposed on the bottom surface of the cleaning chamber 19. The distal end of the rod 81a is connected to the lift table 49. For example, the lift cylinder 81 is an electric cylinder, and is numerically controlled by the control device 25. When the lift cylinder 81 extends, the cleaning table 31 rises. When the lift cylinder 81 contracts, the cleaning table 31 lowers. The rod 81a may be connected to the connecting plate 79.

The cover 74 is a safety cover and covers the stem 77, the lift guide 72, the lift cylinder 81, and the connecting plate 79.

As shown in FIG. 5, the cleaning table 31 includes a top plate 33, a journal block (first journal block) 43, and a journal block (second journal block) 143. The cleaning table 31 may include a cylindrical hole (first receiving portion) 41, a support base 35, a cylindrical hole (second receiving portion) 48 (see FIG. 3), a guide groove 37, and a phasing block 45.

The top plate 33 has a rectangular shape. When the lifter 71 is lowered, the top plate 33 is placed on the turn table 87.

The journal block 43 is a V-block and is disposed on the upper surface of the cleaning table 31. The journal block 43 has a V-surface 43a on its center.

The journal block 143 is substantially to the same as the journal block 43.

The phasing block 45 is arranged, for example, near the center of the journal block 43. The phasing block 45 has a phasing surface 45a. The phasing surface 45a is disposed, for example, in parallel with the XZ plane, toward the cleaning axis 21 so as to sandwich the cleaning axis 21. The phasing surface 45a abuts the phasing surface 3c of the workpiece 3.

The support base 35 is, for example, a cylinder. The support base 35 is disposed inside the passage opening 89 in plan view, and extends below the top plate 33. The lower surface of the support base 35 is a contact surface 35a. When the lifter 71 rises, the contact surface 35a comes into contact with the lift table 49.

The guide grooves 37 are arranged at the left and right ends of the top plate 33. The guide groove 37 is rectangular in plan view and extends in the vertical direction. The guide groove 37, at a position matching the guide 39, is disposed to have a gap between the guide groove and the guide 39. When the lifter 71 moves up and down, the guide groove 37 is guided by the guide 39.

The cylindrical hole 41 is disposed on the lower surface of the cleaning table 31. Preferably, the cylindrical holes 41 are disposed at the left and right end portions, respectively. When the lifter 71 rises, the round pin 42 is inserted into the cylindrical hole 41. At this time, the cylindrical hole 41 and the cylindrical portion 42a are fitted to each other.

As shown in FIG. 3, the cylindrical hole 48 is disposed on the lower surface of the cleaning table 31. Preferably, the cylindrical holes 48 are disposed at the left and right ends, respectively. The round pin 47 is inserted into the cylindrical hole 48 when the lifter 71 is lowered and the cleaning table 31 is lowered to the turn table 87. At this time, the cylindrical hole 48 and the cylindrical portion 47a come into contact with each other.

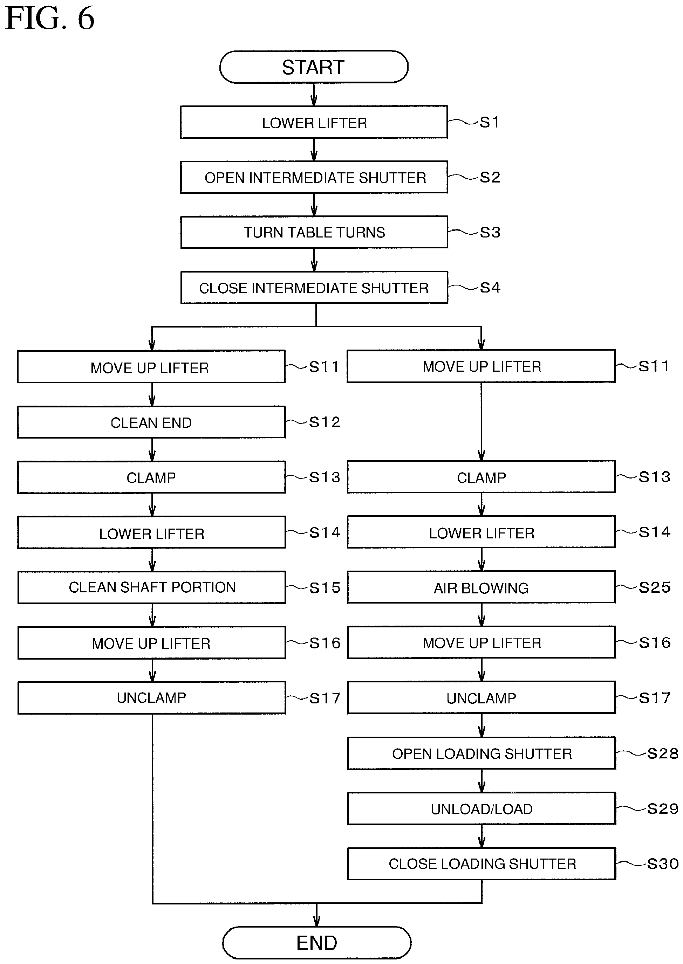

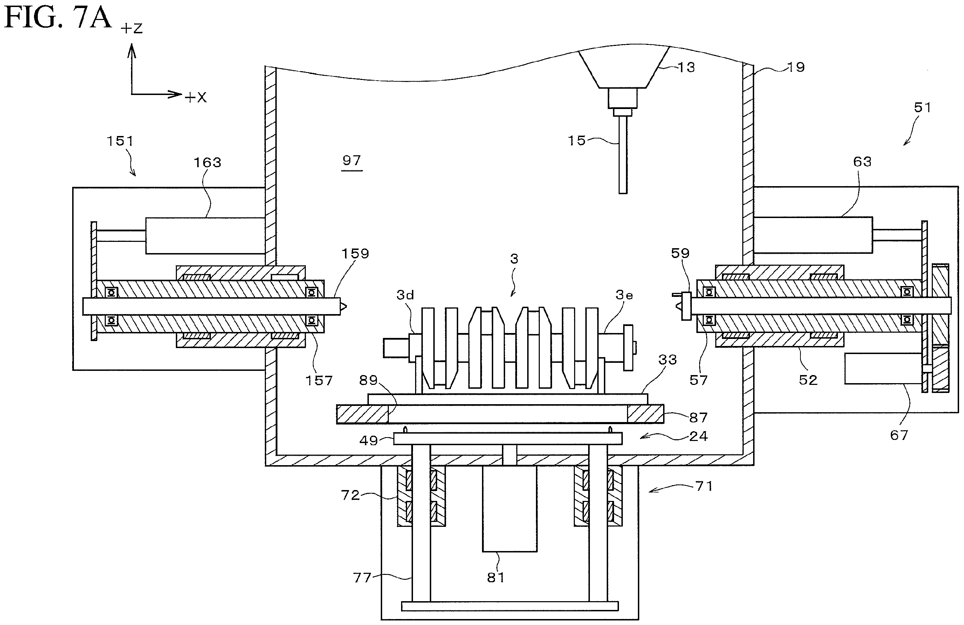

Next, the cleaning method will be described with reference to FIG. 6 and FIGS. 7A to 7H. In FIG. 6, the flow chart branching to the left shows the cleaning method by the cleaning station 97, and the flow chart branching to the right shows the drying method in the drying station 95.

As shown in FIG. 7A, in the drying station 95 and the cleaning station 97, the lifter 71 lowers the cleaning table 31 on which the workpiece 3 is mounted onto the turn table 87. In step S1, the lifter 71 moves down to the retracted position 24. Here, the retracted position 24 is a position at which the lift table 49 does not interfere with the turn table 87 when the lift table 49 is positioned below the turn table 87 and the turn table 87 turns. When the lifter 71 moves down, the lift table 49 passes through the passage opening 89. The retracted position 24 may be the same position regardless of the type of the workpiece 3. For example, it is preferable to set the lowest end to the retracted position 24.

Next, in step S2, the intermediate shutter 94 is opened. As a result, the conveyance port 96 is opened.

Next, the turn table 87 is turned. In step S3, with the workpiece 3 before cleaning and the cleaning table 31 being carried on, the region 87a in the drying station 95 moves to the cleaning station 97. With the workpiece 3 after cleaning and the cleaning table 31 being carried on, the region 87b in the cleaning station 97 moves to the drying station.

Next, in step S4, the intermediate shutter 94 is closed. This separates the cleaning station 97 from the drying station 95.

Next, a cleaning process in the cleaning station 97 will be described.

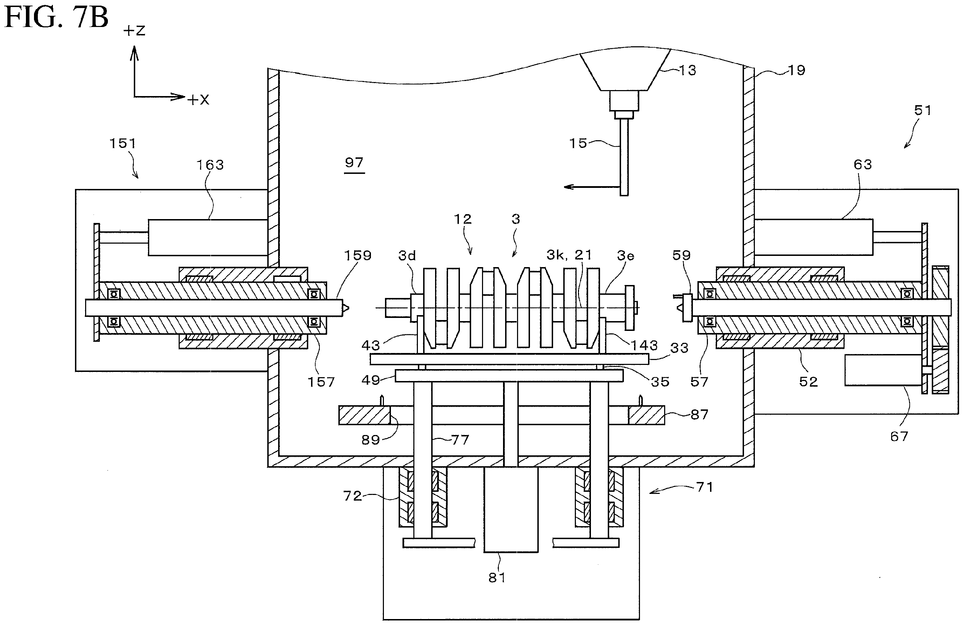

As shown in FIG. 7B, the lifter 71 raises the cleaning table 31 in step S11. The lift table 49 passes through the passage opening 89 and supports the cleaning table 31. Subsequently, the lift table 49 rises and the cleaning table 31 reaches a cleaning position 12. In the cleaning position 12, the center axis 3k is aligned with the cleaning axis 21.

The pump 18 supplies the cleaning liquid to the nozzle 15. The nozzle 15 ejects the cleaning liquid. As shown in FIG. 7C, the moving device 14 inserts the nozzles 15 between the clamp shafts 59, 159 and the workpiece 3, and causes the jet to collide with the workpiece 3 to clean the both ends 3g of the workpiece 3 in step S12. Thereafter, the moving device 14 moves the nozzle 15 upward to retract.

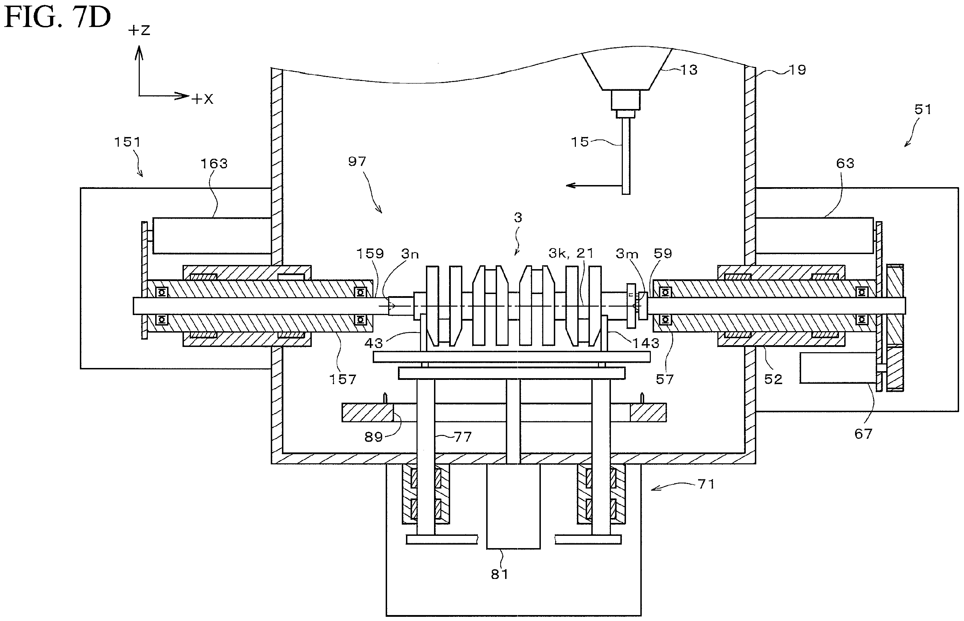

As shown in FIG. 7D, the clamp cylinder 63 advances the slide shaft 57. The clamp shaft 59 abuts against the first end 3m of the workpiece 3. The center pin 61 is inserted into the center hole 3a. Phasing pin 60 is inserted into the phasing hole 3b. The clamp cylinder 63 presses the clamp shaft 59 against the first end 3m. The control device 25 controls the displacement of the clamp shaft 59 based on the position of the first end 3m.

The clamp cylinder 163 advances the slide shaft 157. The clamp shaft 159 abuts against the second end 3n of the workpiece 3. The clamp cylinder 163 presses the clamp shaft 159 against the second end 3n. The control device 25 controls the displacement of the clamp shaft 159 based on the position of the second end 3n. In this manner, the workpiece 3 is clamped to the clamp shafts 59 and 159 in step S13.

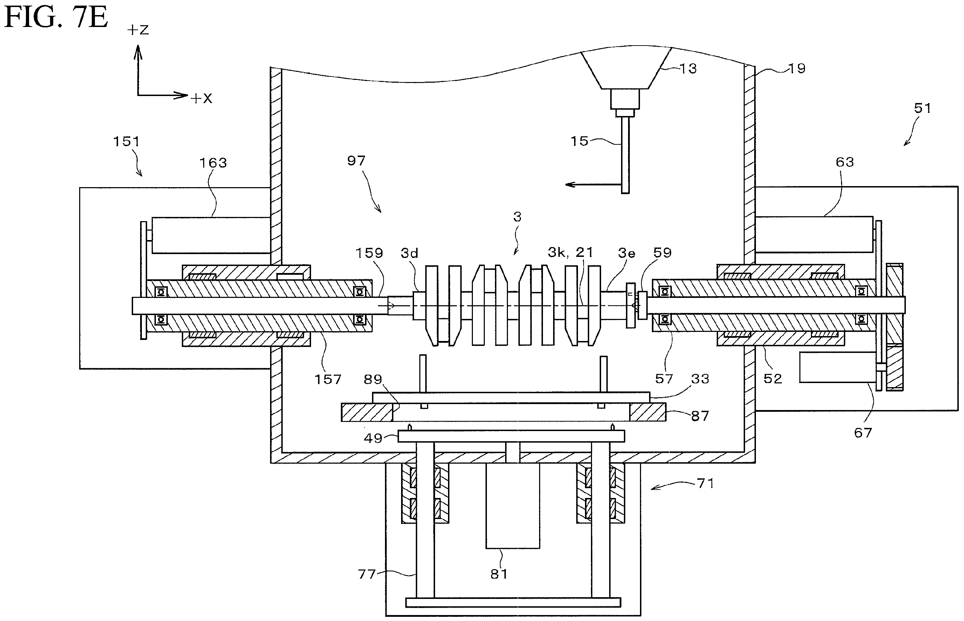

As shown in FIG. 7E, in step S14, the lifter 71 lowers the cleaning table 31 to the retracted position 24. At this time, the lifter 71 places the cleaning table 31 on the turn table 87.

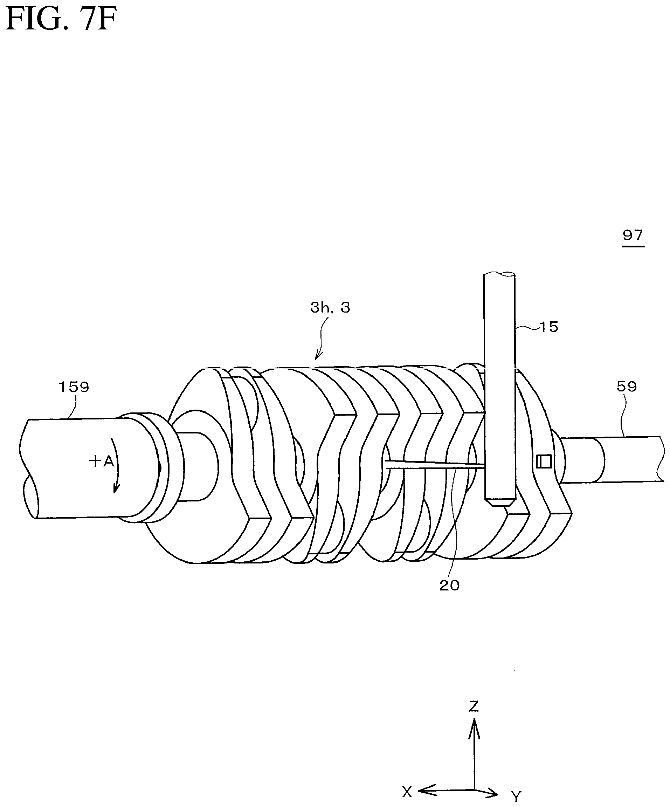

As shown in FIG. 7F, the moving device 14 moves the nozzles 15 to collide the jet 20 with the workpiece 3, and cleans the shaft portion 3h. At this time, the control device 25 appropriately rotates the workpiece 3, or positions the workpiece 3 in the rotational direction with the clamp shafts 59, 159 being together in step S15.

The lifter 71 raises the cleaning table 31 to the cleaning position in step S16.

The clamp cylinders 63, 163 retract the slide shafts 57, 157, respectively. The clamp shafts 59, 159 are spaced apart from the workpiece 3. In step S17, the workpiece 3 is unclamped and placed on the cleaning table 31.

Next, the procedure of drying, unloading, and loading in the drying station 95 will be described.

In step S11, the lifter 71 raises the cleaning table 31 to the drying position. The center axis 3k is aligned with the drying axis 121.

Next, in step S13, the clamping devices 51, 151 clamp the workpiece 3. In step S14, the lifter 71 is lowered, and the cleaning table 31 is placed on the turn table 87. The lifter 71 further lowers to the retracted position.

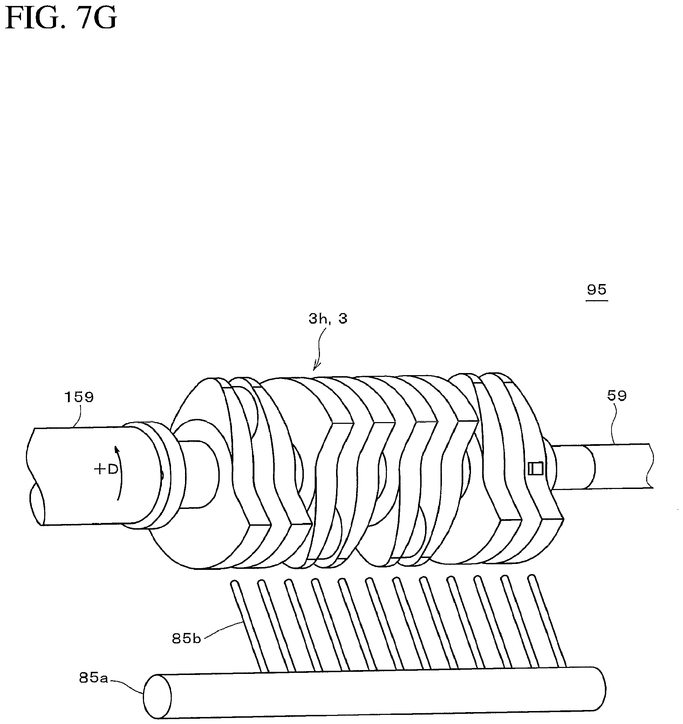

Next, in step S25, the workpiece is air blown. As shown in FIG. 7G, the injection port of the air blowing nozzle 85b faces the workpiece 3. The air blowing nozzles 85b eject compressed air or dry air. The clamp shafts 59, 159 rotate the workpiece 3 as appropriate.

In step S16, the lifter 71 raises the cleaning table 31 to the drying position.

In step S17, the clamping devices 51, 151 unclamp the workpiece. The workpiece 3 is placed on the cleaning table 31.

In step S28, the loading shutter is opened.

The workpiece 3 in the drying station 95 is unloaded by a conveyance device (not shown) or by an operator. Next, the control device 25 controls the height of the cleaning table 31 based on the diameter of the journal of the workpiece 3.

The workpiece 3 is loaded into the cleaning table 31 by the conveyance device (not shown) or the operator. FIG. 7H is a cross-sectional view of a perpendicular plane passing through the drying axis 121 as viewed from the front. In step S29, as shown in FIG. 7H, the journal 3d is aligned with the journal block 43, and the journal 3e is aligned with the journal block 143. The phasing surface 3c abuts the phasing surface 45a, and the phase of the workpiece 3 is matched with the cleaning table 31.

Finally, in step S30, the loading shutter is closed.

Steps S1 and S2 may be performed simultaneously. Step S4, step S11 at the cleaning station 97 and step S11 at the drying station 95 may be performed simultaneously. Step S16 and step S28 in the drying station 95 may be performed simultaneously. Steps S11, S13, S14, S25, S16, S17, and S28 to S29 in the drying station 95 are performed in parallel with steps S11 to S17 in the cleaning station 97.

According to the present embodiment, the workpiece 3 is clamped to the clamp shafts 59, 159 about the cleaning axis 21. The clamp shafts 59, 159 and the workpiece 3 rotate together. When cleaning or air blowing is performed, the cleaning table 31 is placed on the turn table 87 and is retracted downward. Therefore, the cleaning table 31 does not interfere with the cleaning or air blowing the shaft portion 3h. At the time of unclamping, since the end 3g is exposed, the nozzles 15 can clean the end 3g.

Since the lift cylinder 81 is a numerically controlled electric cylinder, the center axis 3k of the workpiece 3 having different diameters of the journals 3d, 3e can be aligned with the cleaning axis 21 or the drying axis 121. Since the clamp cylinders 63, 163 are numerically controlled electric cylinders, the clamp shafts 59, 159 can abut against the workpiece 3 having different lengths to clamp the workpiece 3 at a predetermined position.

Since the round pin 42 is disposed on the lift table 49 and the cylindrical hole 41 is disposed on the cleaning table 31, the lift table 49 can mount the cleaning table 31 at an accurate position.

Since the guide 39 guides the guide groove 37, it is possible to suppress the shift of the cleaning table 31 when the cleaning table 31 is moved up and down.

Since the round pin 47 is disposed on the turn table 87 and the cylindrical hole 48 is disposed on the cleaning table 31, the turn table 87 can mount the cleaning table 31 at an accurate position. Further, when the turn table 87 turns, the positional deviation of the cleaning table 31 can be suppressed.

Since the end 3g is cleaned while the workpiece 3 is installed on the cleaning table 31, and the workpiece 3 is clamped after the end 3g is cleaned, it is possible to suppress the clamp shafts 59, 159 from becoming dirty.

The workpiece 3 is cleaned while being sandwiched and supported by the clamp shafts 59, 159 through the cleaning axis 21. Since the cleaning table 31 is separated from the workpiece 3 when cleaning the shaft portion 3h, the nozzles 15 can easily approach the workpiece 3 and efficiently clean the workpiece 3. Since the workpiece 3 and the cleaning table 31 are separated from each other in the clamped state, and the workpiece 3 is rotated in a state in which the center axis 3k of the workpiece 3 and the cleaning axis 21 are aligned with each other, the inertia can be reduced. It is substantially the same when drying.

Since the cleaning table 31 is separated from the workpiece 3 when the workpiece 3 is air blown, the air blowing nozzle 85b can approach the workpiece 3. Since the air blowing nozzle 85b and the workpiece 3 can approach each other, the blowing effect is enhanced.

The cleaning chamber 19 includes a cleaning station 97 and a drying station 95, and the turn table 87 turns to convey one workpiece 3 to the cleaning station 97 and another workpiece 3 to the drying station 95. While one workpiece 3 is cleaned in the cleaning station, another workpiece 3 which has been cleaned is air blown, the dried workpiece 3 is unloaded, and the workpiece 3 before cleaning is loaded. Therefore, the cycle time can be shortened.

The present invention is not limited to the embodiments described above, and various modifications can be made without departing from the gist of the present invention, and all technical matters included in the technical idea described in the claims are the subject matter of the present invention. While the foregoing embodiments illustrate preferred examples, those skilled in the art will appreciate that various alternatives, modifications, variations, or improvements may be made in light of the teachings disclosed herein and are within the scope of the appended claims.

### Reference Signs List

3 Workpiece
10 Cleaning apparatus
15 Nozzle (Cleaning nozzle)
21 Cleaning axis
31 Table (Cleaning table)
33 Top plate
49 Lift table
51 Clamping device (First clamping device)
57 Slide shaft (First slide shaft)
59 Clamp shaft (First clamp shaft)
63 Clamp cylinder (First clamp drive)
67 Motor
87 Turn table
151 Clamping device (Second clamping device)
157 Slide shaft (Second slide shaft)
159 Clamp shaft (Second clamp shaft)
163 Clamp cylinder (Second clamp drive)
71 Lifter

## Claims

1. A cleaning apparatus (10) for cleaning a workpiece (3), the cleaning apparatus (10) comprising:
a cleaning chamber (19) having a first side wall, and a second side wall opposed to the first side wall, the cleaning chamber (19) including
a cleaning station (97) having a cleaning axis (21), the cleaning station (97) being provided with a cleaning nozzle (15), the cleaning station (97) including
a first clamping device (51) arranged on the second side wall, and
a second clamping device (151) arranged on the first side wall,
a drying station (95) having a drying axis (121), the drying station (95) being provided with a drying nozzle (85b), the drying station (95) including
the first clamping device (51) arranged on the second side wall, and
the second clamping device (151) arranged on the first side wall;
a turn table (87) having two regions (87a, 87b) arranged in a 180 degree rotational symmetry, the turn table (87) configured to arrange one of the two regions in the cleaning station (97) and the other of the two regions in the drying station (95); and
a cleaning table (31) arranged in each of the two regions (87a, 87b), the cleaning table (31) including a journal block (43, 143);
wherein each of the cleaning station (97) and the drying station (95) includes a lifter (71) having a lift table (49), the lifter (71) is configured to move up and down between a cleaning position (12) and a retracted position (24), the lift table (49) moves up to support the cleaning table (31) at the cleaning position (12), and the cleaning table (31) is placed on the turn table (87) to retract the lift table (49) below the turn table (87) at the retracted position (24),
the first clamping device (51) includes
a first slide shaft (57) configured to reciprocate along the cleaning axis (12) or the drying axis (121),
a first clamp shaft (59) supported in the first slide shaft (57) in a rotatable manner about the cleaning axis (12) or the drying axis (121) to abut the workpiece (3),
a first clamp driving device (63) configured to reciprocate the first slide shaft (57), and
a motor (67) configured to rotate the first clamp shaft (59),
the second clamping device (151) includes
a second slide shaft (157) configured to reciprocate along the cleaning axis (12) or the drying axis (121),
a second clamp shaft (159) supported in the second slide shaft (157) in a rotatable manner about the cleaning axis (12) or the drying axis (121) to abut the workpiece (3), and
a second clamp driving device (163) configured to reciprocate the second slide shaft (157).

2. The cleaning apparatus according to claim 1, further comprising:
a first inserting portion (42) arranged on one of the cleaning table (31) and the lift table (49); and
a first receiving portion (41) arranged on the other of the cleaning table (31) and the lift table (49), the first receiving portion (41) configured to receive the first inserting portion (42).

3. The cleaning apparatus according to claim 1 or 2, wherein
the turn table (87) includes a passage opening (89) formed to each of the two regions (87a, 87b), and the passage opening (89) is located above the lift table (49) when the two regions (87a, 87b) are located in the cleaning station (97) and the drying station (95).

4. The cleaning apparatus according to any one of claims 1 to 3, further comprising:
a second insertion portion (47) arranged on one of the cleaning table (31) and the turn table (87); and
a second receiving portion (48) arranged on the other of the cleaning table (31) and the turn table (87), the second receiving portion (48) configured to receive the second insertion portion (47).

5. The cleaning apparatus according to any one of claims 1 to 4, wherein
the lifter (71) includes
a lift guide (72) arranged on the cleaning chamber (19),
a stem (77) connected to the lift table (49), the stem (77) arranged through a bottom surface of the cleaning chamber (19), the stem (77) configured to reciprocate along the lift guide (72) together with the lift table (49), and
a lift cylinder (81) configured to drive the stem (77).

6. The cleaning apparatus according to claim 5, wherein
the lift cylinder (81) is a numerically controlled electric cylinder.

7. The cleaning apparatus according to any one of claims 1 to 6, wherein
the first clamping device (51) includes a first guide bush (52) having a hollow and arranged on the cleaning chamber (19) along the cleaning axis (21) or the drying axis (121), the first guide bush (52) configured to slide the first slide shaft (57) inside the first guide bush (52),
the second clamping device (151) includes a second guide bush (152) having a hollow and arranged on the cleaning chamber (19) along the cleaning axis (21) or the drying axis (121), the second guide bush (152) configured to slide the second slide shaft (157) inside the second guide bush (152).

8. The cleaning apparatus according to any one of claims 1 to 7, further comprising:
a moving device (14) configured to move the cleaning nozzle (15) with respect to the workpiece (3).

9. The cleaning apparatus according to any one of claims 1 to 8, wherein
each of the first clamp driving device (63) and the second clamp driving device (163) is a numerically controlled electric cylinder.

10. The cleaning apparatus according to any one of claims 1 to 5, wherein
the first clamp shaft (59) is arranged through the first side wall of the cleaning station (97) or the second side wall of the drying station (95),
the motor (67) is arranged outside the cleaning chamber (19), and
the second clamp shaft (159) is arranged through the second side wall of the cleaning station (97) or the first side wall of the drying station (95).

11. A cleaning method of axially extending workpiece (3), the cleaning method comprising:
loading the workpiece (3) on a cleaning table (31);
lowering a lifter (71) to place the cleaning table (31) on a turn table (87);
turning the turn table (87) to convey the workpiece (3) from a drying station (95) to a cleaning station (97),
moving the cleaning table (31) by the lifter (71) to align a center axis (3k) of the workpiece (3) with a cleaning axis (21) in the cleaning station (97);
clamping the workpiece (3) by abutting a first clamp shaft (59) extending from a first side wall of a cleaning chamber (19) against a first end (3m) of the workpiece (3), and by abutting a second clamp shaft (159) extending from a second side wall of the cleaning chamber (19) opposed to the first side wall against a second end (3n) of the workpiece (3);
lowering the lifter (71) to place the cleaning table (31) on the turn table (87);
cleaning an outer circumferential surface of the workpiece (3) while rotating the workpiece (3), the first clamp shaft (59), and the second clamp shaft (159) together;
moving the cleaning table (31) to a cleaning position (12) by the lifter (71);
unclamping the workpiece (3) by separating the first clamp shaft (59) from the first end (3m) of the workpiece (3), and by separating the second clamp shaft (159) from the second end (3n) of the workpiece (3);
lowering the lifter (71) to place the cleaning table (31) on the turn table (87);
turning the turn table (87) to convey the workpiece (3) from the cleaning station (97) to the drying station (95);
moving the cleaning table (31) to a drying position (112) by the lifter (71) to align the center axis (3k) of the workpiece (3) with a drying axis (121) in the drying station (95);
clamping the workpiece (3) by abutting the first clamp shaft (59) extending from the second side wall of the cleaning chamber (19) against the first end (3m) of the workpiece (3), and by abutting the second clamp shaft (159) extending from the first side wall of the cleaning chamber (19) against the second end (3n) of the workpiece (3);
lowering the lifter (71) to place the cleaning table (31) on the turn table (87);
drying the outer circumferential surface of the workpiece (3) while rotating the workpiece (3), the first clamp shaft (59), and the second clamp shaft (159) together;
moving the cleaning table (31) to the drying position (112) by the lifter (71);
unclamping the workpiece (3) by separating the first clamp shaft (59) from the first end (3m) of the workpiece (3), and by separating the second clamp shaft (159) from the second end (3n) of the workpiece (3); and
unloading the dried workpiece (3) from the cleaning table (31).

12. The cleaning method according to claim 11, further comprising:
cleaning an end (3g) of the workpiece (3).

## Patentansprüche

1. Reinigungsvorrichtung (10) zum Reinigen eines Werkstücks (3), wobei die Reinigungsvorrichtung (10) aufweist:
eine Reinigungskammer (19) mit einer ersten Seitenwand und einer zweiten Seitenwand, die der ersten Seitenwand gegenüberliegt, wobei die Reinigungskammer (19) aufweist:
eine Reinigungsstation (97) mit einer Reinigungsachse (21), wobei die Reinigungsstation (97) mit einer Reinigungsdüse (15) versehen ist, wobei die Reinigungsstation (97) aufweist:
eine erste Klemmvorrichtung (51), die an der zweiten Seitenwand angeordnet ist, und
eine zweite Klemmvorrichtung (151), die an der ersten Seitenwand angeordnet ist,
eine Trockenstation (95) mit einer Trocknungsachse (121), wobei die Trockenstation (95) mit einer Trocknungsdüse (85b) versehen ist, wobei die Trockenstation (95) aufweist:
die erste Klemmvorrichtung (51), die an der zweiten Seitenwand angeordnet ist, und die zweite Klemmvorrichtung (151), die an der ersten Seitenwand angeordnet ist;
einen Drehtisch (87) mit zwei Bereichen (87a, 87b), die in einer 180-Grad-Rotationssymmetrie angeordnet sind, wobei der Drehtisch (87) konfiguriert ist, einen der beiden Bereiche in der Reinigungsstation (97) und den anderen der beiden Bereiche in der Trockenstation (95) anzuordnen; und
einen Reinigungstisch (31), der in jedem der beiden Bereiche (87a, 87b) angeordnet ist, wobei der Reinigungstisch (31) einen Lagerzapfenblock (43, 143) aufweist;
wobei jeweils die Reinigungsstation (97) und die Trockenstation (95) einen Hebevorrichtung (71) mit einem Hubtisch (49) aufweist, die Hebevorrichtung (71) konfiguriert ist, sich zwischen einer Reinigungsposition (12) und einer zurückgezogenen Position (24) nach oben und unten zu bewegen, sich der Hubtisch (49) nach oben bewegt, um den Reinigungstisch (31) in der Reinigungsposition (12) zu halten, und wobei der Reinigungstisch (31) auf dem Drehtisch (87) platziert wird, um den Hubtisch (49) in der zurückgezogenen Position (24) unter den Drehtisch (87) zurückzuziehen,
die erste Klemmvorrichtung (51) aufweist:
eine erste Gleitwelle (57), die konfiguriert ist, sich entlang der Reinigungsachse (12) oder der Trocknungsachse (121) hin- und herzubewegen,
eine erste Klemmwelle (59), die in der ersten Gleitwelle (57) drehbar um die Reinigungsachse (12) oder die Trocknungsachse (121) gelagert ist, um an dem Werkstück (3) anzuliegen,
eine erste Klemmantriebsvorrichtung (63), die konfiguriert ist, die erste Gleitwelle (57) hin- und herzubewegen, und
einen Motor (67), der konfiguriert ist, die erste Klemmwelle (59) zu drehen,
die zweite Klemmvorrichtung (151) aufweist:
eine zweite Gleitwelle (157), die konfiguriert ist, sich entlang der Reinigungsachse (12) oder der Trocknungsachse (121) hin- und herzubewegen,
eine zweite Klemmwelle (159), die in der zweiten Gleitwelle (157) drehbar um die Reinigungsachse (12) oder die Trocknungsachse (121) gelagert ist, um an dem Werkstück (3) anzuliegen, und
eine zweite Klammerantriebsvorrichtung (163), die konfiguriert ist, die zweite Gleitwelle (157) hin- und herzubewegen.

2. Reinigungsvorrichtung nach Anspruch 1, die ferner aufweist:
einen ersten Einsatzabschnitt (42), der auf einem des Reinigungstischs (31) und des Hubtischs (49) angeordnet ist; und
einen ersten Aufnahmeabschnitt (41), der auf dem anderen des Reinigungstischs (31) und des Hubtischs (49) angeordnet ist, wobei der erste Aufnahmeabschnitt (41) konfiguriert ist, den ersten Einsetzabschnitt (42) aufzunehmen.

3. Reinigungsvorrichtung nach Anspruch 1 oder 2, wobei der Drehtisch (87) eine Durchgangsöffnung (89) aufweist, die in jedem der beiden Bereiche (87a, 87b) ausgebildet ist, und die Durchgangsöffnung (89) über dem Hubtisch (49) angeordnet ist, wenn die beiden Bereiche (87a, 87b) in der Reinigungsstation (97) und der Trockenstation (95) angeordnet sind.

4. Reinigungsvorrichtung nach einem der Ansprüche 1 bis 3, die ferner aufweist:
einen zweiten Einsatzabschnitt (47), der auf einem des Reinigungstischs (31) und des Drehtischs (87) angeordnet ist; und
einen zweiten Aufnahmeabschnitt (48), der auf dem anderen des Reinigungstischs (31) und des Drehtischs (87) angeordnet ist, wobei der zweite Aufnahmeabschnitt (48) konfiguriert ist, den zweiten Einsatzabschnitt (47) aufzunehmen.

5. Reinigungsvorrichtung nach einem der Ansprüche 1 bis 4, wobei der Hebevorrichtung (71) aufweist:
eine Hubführung (72), die an der Reinigungskammer (19) angeordnet ist,
eine Stange (77), die mit dem Hubtisch (49) verbunden ist, wobei die Stange (77) durch eine Bodenfläche der Reinigungskammer (19) hindurch angeordnet ist, wobei die Stange (77) konfiguriert ist, sich entlang der Hubführung (72) zusammen mit dem Hubtisch (49) hin- und herzubewegen, und
einen Hubzylinder (81), der konfiguriert ist, die Stange (77) anzutreiben.

6. Reinigungsvorrichtung nach Anspruch 5, wobei der Hubzylinder (81) ein numerisch gesteuerter Elektrozylinder ist.

7. Reinigungsvorrichtung nach einem der Ansprüche 1 bis 6, wobei
die erste Klemmvorrichtung (51) eine erste Führungsbuchse (52) aufweist, die einen Hohlraum aufweist und an der Reinigungskammer (19) entlang der Reinigungsachse (21) oder der Trocknungsachse (121) angeordnet ist, wobei die erste Führungsbuchse (52) konfiguriert ist, die erste Gleitwelle (57) innerhalb der ersten Führungsbuchse (52) gleiten zu lassen,
die zweite Klemmvorrichtung (151) eine zweite Führungsbuchse (152) aufweist, die einen Hohlraum aufweist und an der Reinigungskammer (19) entlang der Reinigungsachse (21) oder der Trocknungsachse (121) angeordnet ist, wobei die zweite Führungsbuchse (152) konfiguriert ist, zweite Gleitwelle (157) in der zweiten Führungsbuchse (152) gleiten zu lassen.

8. Reinigungsvorrichtung nach einem der Ansprüche 1 bis 7, die ferner aufweist:
eine Bewegungsvorrichtung (14), die zum Bewegen der Reinigungsdüse (15) in Bezug auf das Werkstück (3) konfiguriert ist.

9. Reinigungsvorrichtung nach einem der Ansprüche 1 bis 8, wobei jeweils die erste Klemmantriebsvorrichtung (63) und die zweite Klemmantriebsvorrichtung (163) ein numerisch gesteuerter Elektrozylinder ist.

10. Reinigungsvorrichtung nach einem der Ansprüche 1 bis 5, wobei
die erste Klemmwelle (59) durch die erste Seitenwand der Reinigungsstation (97) oder die zweite Seitenwand der Trockenstation (95) angeordnet ist,
der Motor (67) außerhalb der Reinigungskammer (19) angeordnet ist, und
die zweite Klemmwelle (159) durch die zweite Seitenwand der Reinigungsstation (97) oder die erste Seitenwand der Trockenstation (95) angeordnet ist.

11. Reinigungsverfahren für ein sich axial erstreckendes Werkstück (3), wobei das Reinigungsverfahren aufweist:
Laden des Werkstücks (3) auf einen Reinigungstisch (31); Absenken einer Hebevorrichtung (71), um den Reinigungstisch (31) auf einem Drehtisch (87) zu platzieren;
Drehen des Drehtischs (87), um das Werkstück (3) von einer Trockenstation (95) zu einer Reinigungsstation (97) zu befördern,
Bewegen des Reinigungstischs (31) durch die Hebevorrichtung (71) um eine Mittelachse (3k) des Werkstücks (3) mit einer Reinigungsachse (21) in der Reinigungsstation (97) auszurichten;
Festklemmen des Werkstücks (3) durch Anlegen einer ersten Klemmwelle (59), die sich von einer ersten Seitenwand einer Reinigungskammer (19) erstreckt, an ein erstes Ende (3m) des Werkstücks (3) und durch Anlegen einer zweiten Klemmwelle (159), die sich von einer zweiten Seitenwand der Reinigungskammer (19) gegenüber der ersten Seitenwand erstreckt, an ein zweites Ende (3n) des Werkstücks (3);
Absenken der Hebevorrichtung (71), um den Reinigungstisch (31) auf dem Drehtisch (87) zu platzieren;
Reinigen einer äußeren Umfangsfläche des Werkstücks (3), während das Werkstück (3), die erste Klemmwelle (59) und die zweite Klemmwelle (159) miteinander gedreht werden;
Bewegen des Reinigungstischs (31) in eine Reinigungsposition (12) durch die Hebevorrichtung (71);
Lösen des Werkstücks (3) durch Trennen der ersten Klemmwelle (59) vom ersten Ende (3m) des Werkstücks (3) und durch Trennen der zweiten Klemmwelle (159) vom zweiten Ende (3n) des Werkstücks (3);
Absenken der Hebevorrichtung (71), um den Reinigungstisch (31) auf den Drehtisch (87) zu platzieren;
Drehen des Drehtischs (87), um das Werkstück (3) von der Reinigungsstation (97) zur Trockenstation (95) zu befördern;
Bewegen des Reinigungstischs (31) in eine Trocknungsposition (112) durch die Hebevorrichtung (71), um
die Mittelachse (3k) des Werkstücks (3) mit einer Trocknungsachse (121) in der Trockenstation (95) auszurichten;
Festklemmen des Werkstücks (3) durch Anlegen der ersten Klemmwelle (59), die sich von der zweiten Seitenwand der Reinigungskammer (19) erstreckt, an das erste Ende (3m) des Werkstücks (3) und durch Anlegen der zweiten Klemmwelle (159), die sich von der ersten Seitenwand der Reinigungskammer (19) erstreckt, an das zweite Ende (3n) des Werkstücks (3);
Absenken der Hebevorrichtung (71), um den Reinigungstisch (31) auf den Drehtisch (87) zu platzieren;
Trocknen der äußeren Umfangsfläche des Werkstücks (3), während das Werkstück (3), die erste Klemmwelle (59) und die zweite Klemmwelle (159) miteinander gedreht werden;
Bewegen des Reinigungstisches (31) in die Trocknungsposition (112) durch die Hebevorrichtung (71);
Lösen des Werkstücks (3) durch Trennen der ersten Klemmwelle (59) von dem ersten Ende (3m) des Werkstücks (3) und durch Trennen der zweiten Klemmwelle (159) vom zweiten Ende (3n) des Werkstücks (3); und
Entladen des getrockneten Werkstücks (3) von dem Reinigungstisch (31).

12. Reinigungsverfahren nach Anspruch 11, das ferner aufweist:
Reinigen eines Endes (3g) des Werkstücks (3).

## Revendications

1. Appareil de nettoyage (10) pour le nettoyage d'une pièce à usiner (3), ledit appareil de nettoyage (10) comprenant :
une chambre de nettoyage (19) ayant une première paroi latérale, et une deuxième paroi latérale opposée à la première paroi latérale, ladite chambre de nettoyage (19) comprenant
une station de nettoyage (97) ayant un axe de nettoyage (21), ladite station de nettoyage (97) étant pourvue d'une buse de nettoyage (15), ladite station de nettoyage (97) comprenant
un premier dispositif de serrage (51) disposé sur la deuxième paroi latérale, et
un deuxième dispositif de serrage (151) disposé sur la première paroi latérale,
une station de séchage (95) ayant un axe de séchage (121), ladite station de séchage (95) étant pourvue d'une buse de séchage (85b), ladite station de séchage (95) comprenant le premier dispositif de serrage (51) disposé sur la deuxième paroi latérale, et le deuxième dispositif de serrage (151) disposé sur la première paroi latérale ;
une table tournante (87) ayant deux zones (87a, 87b) disposées suivant une symétrie rotationnelle de 180 degrés, ladite table tournante (87) étant prévue pour disposer une des deux zones dans la station de nettoyage (97) et l'autre des deux zones dans la station de séchage (95) ; et
une table de nettoyage (31) disposée dans chacun des deux zones (87a, 87b), ladite table de nettoyage (31) comprenant un palier à tourillon (43, 143) ;
où la station de nettoyage (97) et la station de séchage (95) comprennent chacune un dispositif élévateur (71) ayant une table élévatrice (49), ledit dispositif élévateur (71) est prévu pour monter et descendre entre une position de nettoyage (12) et une position de retrait (24), ladite table élévatrice (49) monte pour supporter la table de nettoyage (31) en position de nettoyage (12), et la table de nettoyage (31) est placée sur la table tournante (87) pour retirer la table élévatrice (49) sous la table tournante (87) en position de retrait (24),
le premier dispositif de serrage (51) comprend un premier arbre coulissant (57) prévu pour effectuer un mouvement alternatif le long de l'axe de nettoyage (12) ou de l'axe de séchage (121),
un premier arbre de serrage (59) supporté dans le premier arbre coulissant (57) de manière rotative autour de l'axe de nettoyage (12) ou de l'axe de séchage (121) pour venir en butée contre la pièce à usiner (3),
un premier dispositif d'entraînement de serrage (63) prévu pour entraîner le premier arbre coulissant (57) dans un mouvement alternatif, et
un moteur (67) prévu pour entraîner le premier arbre de serrage (59) en rotation,
le deuxième dispositif de serrage (151) comprend un deuxième arbre coulissant (157) prévu pour effectuer un mouvement alternatif le long de l'axe de nettoyage (12) ou de l'axe de séchage (121),
un deuxième arbre de serrage (159) supporté dans le deuxième arbre coulissant (157) de manière rotative autour de l'axe de nettoyage (12) ou de l'axe de séchage (121) pour venir en butée contre la pièce à usiner (3), et
un deuxième dispositif d'entraînement de serrage (163) prévu pour entraîner le deuxième arbre coulissant (157) dans un mouvement alternatif.

2. Appareil de nettoyage selon la revendication 1, comprenant en outre :
une première partie d'insertion (42) disposée sur la table de nettoyage (31) ou sur la table élévatrice (49) ; et
une première partie de réception (41) disposée sur l'autre table, entre la table de nettoyage (31) et la table élévatrice (49), ladite première partie de réception (41) étant prévue pour recevoir la première partie d'insertion (42) .

3. Appareil de nettoyage selon la revendication 1 ou la revendication 2, où
la table tournante (87) comprend une ouverture de passage (89) formée vers chacune des deux zones (87a, 87b), et
ladite ouverture de passage (89) est située au-dessus de la table élévatrice (49) quand les deux zones (87a, 87b) sont disposées dans la station de nettoyage (97) et la station de séchage (95).

4. Appareil de nettoyage selon l'une des revendications 1 à 3, comprenant en outre :
une deuxième partie d'insertion (47) disposée sur la table de nettoyage (31) ou sur la table tournante (87) ; et
une deuxième partie de réception (48) disposée sur l'autre table, entre la table de nettoyage (31) et la table tournante (87), ladite deuxième partie de réception (48) étant prévue pour recevoir la deuxième partie d'insertion (47) .

5. Appareil de nettoyage selon l'une des revendications 1 à 4, où le dispositif élévateur (71) comprend
un guidage d'élévation (72) disposé sur la chambre de nettoyage (19),
une tige (77) raccordée à la table élévatrice (49), ladite tige (77) étant prévue traversant une surface de fond de la chambre de nettoyage (19), ladite tige (77) étant prévue pour effectuer un mouvement alternatif le long du guidage d'élévation (72) avec la table élévatrice (49), et
un vérin de levage (81) prévu pour entraîner ladite tige (77) .

6. Appareil de nettoyage selon la revendication 5, où le vérin de levage (81) est un vérin électrique à commande numérique.

7. Appareil de nettoyage selon l'une des revendications 1 à 6, où
le premier dispositif de serrage (51) comprend une première douille de guidage (52) ayant un intérieur creux et disposée sur la chambre de nettoyage (19) le long de l'axe de nettoyage (21) ou de l'axe de séchage (121), ladite première douille de guidage (52) étant prévue pour le coulissement du premier arbre coulissant (57) à l'intérieur de ladite première douille de guidage (52), le deuxième dispositif de serrage (151) comprend une deuxième douille de guidage (152) ayant un intérieur creux et disposée sur la chambre de nettoyage (19) le long de l'axe de nettoyage (21) ou de l'axe de séchage (121), ladite deuxième douille de guidage (152) étant prévue pour le coulissement du deuxième arbre coulissant (157) à l'intérieur de la deuxième douille de guidage (152).

8. Appareil de nettoyage selon l'une des revendications 1 à 7, comprenant en outre :
un dispositif de déplacement (14) prévu pour déplacer la buse de nettoyage (15) par rapport à la pièce à usiner (3).

9. Appareil de nettoyage selon l'une des revendications 1 à 8, où le premier dispositif d'entraînement de serrage (63) et le deuxième dispositif d'entraînement de serrage (163) sont les deux des vérins électrique à commande numérique.

10. Appareil de nettoyage selon l'une des revendications 1 à 5, où
le premier arbre de serrage (59) est prévu traversant la première paroi latérale de la station de nettoyage (97) ou la deuxième paroi latérale de la station de séchage (95), le moteur (67) est disposé à l'extérieur de la chambre de nettoyage (19), et
le deuxième arbre de serrage (159) est prévu traversant la deuxième paroi latérale de la station de nettoyage (97) ou la première paroi latérale de la station de séchage (95).

11. Procédé de nettoyage d'une pièce à usiner (3) à extension axiale, ledit procédé de nettoyage comprenant :
le chargement de la pièce à usiner (3) sur une table de nettoyage (31) ;
l'abaissement d'un dispositif élévateur (71) pour placer la table de nettoyage (31) sur une table tournante (87) ;
la rotation de la table tournante (87) pour transporter la pièce à usiner (3) d'une station de séchage (95) à une station de nettoyage (97),
le déplacement de la table de nettoyage (31) par le dispositif élévateur (71) pour aligner un axe central (3k) de la pièce à usiner (3) avec un axe de nettoyage (21) dans la station de nettoyage (97) ;
le serrage de la pièce à usiner (3) par mise en butée d'un premier arbre de serrage (59) s'étendant depuis une première paroi latérale d'une chambre de nettoyage (19),
contre une première extrémité (3m) de la pièce à usiner (3), et par mise en butée d'un deuxième arbre de serrage (159) s'étendant depuis une deuxième paroi latérale de la chambre de nettoyage (19) opposée à la première paroi latérale, contre une deuxième extrémité (3n) de la pièce à usiner (3) ;
l'abaissement du dispositif élévateur (71) pour placer la table de nettoyage (31) sur la table tournante (87) ;
le nettoyage d'une surface circonférentielle extérieure de la pièce à usiner (3), la pièce à usiner (3) étant entraînée en rotation avec le premier arbre de serrage (59) et le deuxième arbre de serrage (159) ;
le déplacement de la table de nettoyage (31) vers une position de nettoyage (12) par le dispositif élévateur (71) ;
le desserrage de la pièce à usiner (3) par séparation du premier arbre de serrage (59) de la première extrémité (3m) de la pièce à usiner (3), et par séparation du deuxième arbre de serrage (159) de la deuxième extrémité (3n) de la pièce à usiner (3) ;
l'abaissement du dispositif élévateur (71) pour placer la table de nettoyage (31) sur la table tournante (87) ;
la rotation de la table tournante (87) pour transporter la pièce à usiner (3) de la station de nettoyage (97) à la station de séchage (95) ;
le déplacement de la table de nettoyage (31) vers une position de séchage (112) par le dispositif élévateur (71) afin d'aligner l'axe central (3k) de la pièce à usiner (3) avec un axe de séchage (121) dans la station de séchage (95) ;
le serrage de la pièce à usiner (3) par mise en butée du premier arbre de serrage (59) s'étendant depuis le deuxième paroi latérale de la chambre de nettoyage (19) contre la première extrémité (3m) de la pièce à usiner (3), et par mise en butée du deuxième arbre de serrage (159) s'étendant depuis la première paroi latérale de la chambre de nettoyage (19) contre la deuxième extrémité (3n) de la pièce à usiner (3) ;
l'abaissement du dispositif élévateur (71) pour placer la table de nettoyage (31) sur la table tournante (87) ;
le séchage de la surface circonférentielle extérieure de la pièce à usiner (3), la pièce à usiner (3) étant entraînée en rotation avec le premier arbre de serrage (59) et le deuxième arbre de serrage (159) ;
le déplacement de la table de nettoyage (31) vers la position de séchage (112) par le dispositif élévateur (71) ;
le desserrage de la pièce à usiner (3) par séparation du premier arbre de serrage (59) de la première extrémité (3m) de la pièce à usiner (3), et par séparation du deuxième arbre de serrage (159) de la deuxième extrémité (3n) de la pièce à usiner (3) ; et
le déchargement de la pièce à usiner (3) séchée de la table de nettoyage (31).

12. Procédé de nettoyage selon la revendication 11, comprenant en outre :
le nettoyage d'une extrémité (3g) de la pièce à usiner (3).
